# DEMANDE DE BREVET EUROPEEN

(11) **EP 1 306 541 A1**
(43) Date de publication de la demande: **02.05.2003**
(21) Numéro de dépôt: 02292564.8
(22) Date de dépôt: 17.10.2002
(51) Int. Cl.: F02M 35/10, F16L 9/22

(54) **Conduit d'admission thermoformé en matériau non tissé à double flexions**

(30) Priorité: 24.10.2001 FR 0113738
(71) Demandeur: WECOSTA, 59000 Roubaix (FR)
(72) Inventeur: Lepoutre, Henri, 59000 Roubaix (FR)
(74) Mandataire: Eidelsberg, Olivier Nathan

(57) **Abrégé**

Conduit 1 d'admission, thermo-formé en matériau non tissé et comportant des trottoirs 6, 7, 8, 9, parallèles à l'axe longitudinal du conduit faisant saillie de la surface extérieure du conduit, un premier tronçon 4 du conduit étant formé sous la forme d'un premier soufflet, le premier tronçon 4 en forme de soufflet ayant deux trottoirs 6, 7 longitudinaux diamétralement opposés suivant un premier diamètre D2, caractérisé en ce que le conduit comporte au moins un deuxième tronçon 5 en forme de soufflet ayant deux trottoirs 8, 9 longitudinaux diamétralement opposés suivant un deuxième diamètre D3 du conduit qui fait par rapport au premier diamètre D2 des deux trottoirs 6, 7 du premier tronçon en forme de soufflet un angle non nul, et notamment 90°.

## Description

La présente invention se rapporte à un conduit réalisé en matériau non tissé par thermoformage, notamment un conduit d'admission d'air d'un moteur à combustion interne. Ce type de conduit formé par thermoformage est réalisé en soudant bord longitudinal contre bord longitudinal deux hémi-cylindres par l'intermédiaire de deux trottoirs faisant saillie de la surface extérieure des hémi-cylindres. Il est fréquent de former à un certain endroit, le long de l'extension longitudinale de ce type de conduit, un tronçon du conduit sous la forme de soufflets. Dans les conceptions classiques de conduit cylindrique, ces soufflets permettent de fléchir le conduit suivant n'importe quel axe de flexion que ce soit dans le plan XZ ou le plan YZ, Z étant défini comme étant l'axe longitudinal du cylindre et X, Y définissant un plan transversal. Cependant, avec des conduits formés par thermo-compression par soudage de deux hémi-cylindres bout à bout le long de deux trottoirs longitudinaux faisant saillie des surfaces extérieures des deux hémi-cylindres, la flexion dans le plan parallèle au plan dans lequel se trouve les deux trottoirs, c'est-à-dire une torsion par rapport à un axe perpendiculaire au plan dans lequel se trouvent les deux trottoirs, n'est plus possible en raison de la rigidité même des deux trottoirs.

Il en résulte par exemple dans le cas de conduit d'admission, qu'il est plus difficile d'installer ce type de conduit d'admission et notamment le trajet suivant lequel il est installé doit être moins complexe. Il lui est en effet moins facile d'emprunter les trajectoires sinueuses.

La présente invention vise à surmonter cet inconvénient en mettant à disposition un conduit formé par thermo-compression en matériau non tissé, notamment en polyester, qui bien qu'étant formé par thermo-compression et ayant deux trottoirs longitudinaux faisant saillie de sa surface extérieure, peut cependant être fléchi par rapport à n'importe quel axe de flexion.

Suivant l'invention, le conduit d'admission, thermo-formé en matériau non tissé et comportant des trottoirs parallèles à l'axe longitudinal du conduit faisant saillie de la surface extérieure du conduit, un premier tronçon du conduit étant formé sous la forme d'un premier soufflet, le premier tronçon en forme de soufflet ayant deux trottoirs longitudinaux diamétralement opposés suivant un premier diamètre, caractérisé en ce que le conduit comporte au moins un deuxième tronçon en forme de soufflet ayant deux trottoirs longitudinaux diamétralement opposés suivant un deuxième diamètre du conduit qui fait par rapport au premier diamètre des deux trottoirs du premier tronçon en forme de soufflet un angle non nul, et notamment 90°.

En prévoyant ainsi deux tronçons de soufflet décalés l'un par rapport à l'autre on peut obtenir la possibilité de fléchir le conduit soit au niveau du premier tronçon, pour une flexion par exemple suivant un axe donné, soit au niveau du second tronçon à soufflet pour une flexion suivant l'axe dans lequel il n'était pas possible de fléchir le premier tronçon. Le conduit à double tronçons en soufflet peut ainsi être fléchi suivant n'importe quelle direction et être installé facilement dans un véhicule à moteur de la même manière qu'un conduit d'admission sans trottoir.

Suivant un mode de réalisation préféré de l'invention, les deux tronçons à soufflet sont soudés adjacents l'un à côté de l'autre.

On décrit maintenant un mode de réalisation donné uniquement à titre d'exemple d'un conduit d'admission suivant l'invention en se reportant au dessin dans lequel :
La figure 1 est une vue en perspective d'un conduit de l'art antérieur,
La figure 2 est une vue en perspective d'une partie d'un conduit d'admission suivant l'invention, et
La figure 3 est une vue en coupe transversale de la figure 2.

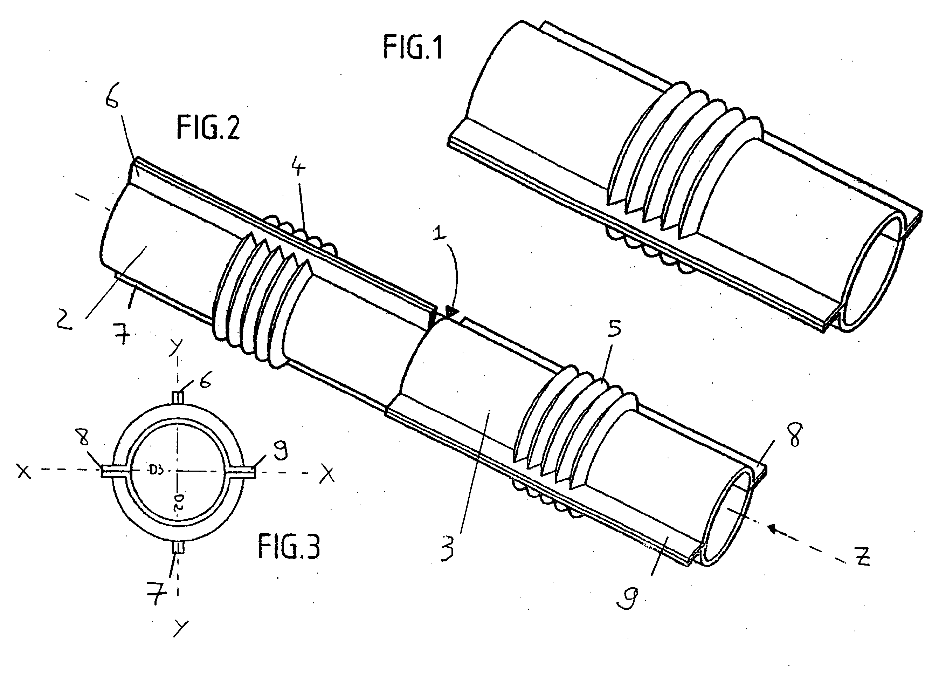

Le conduit 1 est formé par raccordement bout à bout de deux conduits 2 et 3. Chaque conduit 2, 3 est formé par thermoformage d'un matériau non tissé, notamment le polyester. Deux hémi-cylindres sont formés par thermo-compression dans un moule puis retirés du moule et les deux hémi-cylindres sont soudés l'un à l'autre le long de leurs bords longitudinaux, par l'intermédiaire de deux trottoirs, 6, 7, 8, 9 longitudinaux. Le conduit 2 est réalisé en ayant une partie 4 en forme de soufflet. Le conduit 3 est réalisé également en ayant une partie 4 en forme de soufflet. Lorsque l'on met bout à bout les conduits 2 et 3, on les positionne de sorte que le diamètre D2, c'est-à-dire la ligne passant dans la section transversale par les deux trottoirs 6, 7 du conduit 2 fasse un angle de 90° avec le diamètre D3 défini par les deux trottoirs 8, 9 du conduit 3. Ainsi, le conduit d'admission peut être fléchi dans le plan X Z au niveau du soufflet 4 du premier conduit 2 tandis qu'il peut être fléchi dans le plan YZ au niveau du soufflet du deuxième conduit 3.

Pour obtenir encore plus de flexion possible et encore une meilleure fonction, on pourrait penser à mettre trois tronçons à soufflets de ce genre non plus décalés de 90° mais de 60° les uns des autres.

Le nombre de soufflets n'est pas limité par la présente invention. De même, le nombre de conduits à soufflet n'est pas non plus limité par la présente invention.

On entend par diamètre de deux trottoirs diamétralement opposés, la droite imaginaire dans le plan de section transversale du conduit s'étendant d'un trottoir à l'autre. Dans le cas d'une section cylindrique circulaire, cette droite se confond avec le diamètre correspondant. La section transversale du conduit peut avoir d'autres formes que circulaire, par exemple carré, rectangulaire, elliptique, en losange, héxagonale, etc., l'expression diamétralement opposé signifie alors que les deux diamètres sont reliés par une droite imaginaire divisant sensiblement en deux la section transversale du conduit.

## Revendications

1. Conduit (1) d'admission, thermo-formé en matériau non tissé et comportant des trottoirs (6, 7, 8, 9,) parallèles à l'axe longitudinal du conduit faisant saillie de la surface extérieure du conduit, un premier tronçon (4) du conduit étant formé sous la forme d'un premier soufflet, le premier tronçon (4) en forme de soufflet ayant deux trottoirs (6, 7) longitudinaux diamétralement opposés suivant un premier diamètre (D2), **caractérisé en ce que** le conduit comporte au moins un deuxième tronçon (5) en forme de soufflet ayant deux trottoirs (8, 9) longitudinaux diamétralement opposés suivant un deuxième diamètre (D3) du conduit qui fait par rapport au premier diamètre (D2) des deux trottoirs (6, 7) du premier tronçon en forme de soufflet un angle non nul, et notamment 90°.

2. Conduit suivant la revendication 1, **caractérisé en ce que** les deux tronçons à soufflet sont soudés adjacents l'un à côté de l'autre.
